# EUROPEAN PATENT SPECIFICATION

(11) **EP 0 282 535 B1**
(45) Date of publication and mention of the grant of the patent: **05.05.1993**
(21) Application number: 87906001.0
(22) Date of filing: 31.08.1987
(51) Int. Cl.: B29C 51/16, B31F 1/00, B29C 63/02, B29C 65/00

(54) **FABRIC LAMINATION TO CONCAVE SUBSTRATE**
LAMINIERUNG VON GEWEBE AUF KONKAVER UNTERLAGE
PRODUCTION D'UN STRATIFIE EN TISSU SUR UN SUBSTRAT CONCAVE

(30) Priority: 09.09.1986 US 905187
(43) Date of publication of application: 21.09.1988
(73) Proprietor: ASTECHNOLOGIES, INC., Roswell, GA 30077 (US)
(72) Inventor: ELLIOTT, George, M., Alpharetta, GA 30201 (US); SIMMONS, Fred, Arthur, Atlanta, GA 30327 (US)
(74) Representative: VOSSIUS & PARTNER
(86) International application number: US8702172
(87) International publication number: WO8801935

(56) References cited:
- EP-A- 0 227 202
- WO-A-87/04118
- FR-A- 2 576 890
- US-A- 3 256 131
- US-A- 3 265 530
- US-A- 3 654 019
- US-A- 3 817 806
- US-A- 3 891 738
- US-A- 3 935 358
- US-A- 3 992 238
- US-A- 4 009 310
- US-A- 4 052 241
- US-A- 4 097 629
- US-A- 4 119 749
- US-A- 4 124 421
- US-A- 4 131 664
- US-A- 4 199 390
- US-A- 4 260 575
- US-A- 4 323 410
- US-A- 4 327 049
- US-A- 4 379 101
- US-A- 4 469 655
- US-A- 4 517 236
- US-A- 4 519 862
- US-A- 4 718 153

## Description

### Technical Field

This invention relates to a process of laminating fabric to a concave, rigid substrate. In particular, it is directed to a method of lamination using a thermally activated adhesive that results in better bonding in the concave areas.

### Background Art

There are a variety of circumstances in which it is desired to laminate a fabric to a rigid, concave substrate. One example is automobile headliners. These are often formed of concave shells of fiberglass, corrugated paper compositions, or rigid foams, such as foams made of polystyrene, to which a fabric having a soft foam backing is laminated. See, for example, U.S. Patents No. 4,119,749 to Roth et al., No. 4,077,821 to Doerfling, and No. 3,252,732 to Squier. US-Patent No. 4,119,749 describes a method comprising the step of impregnating with polyurethane elastomer or the like the smooth surface of a sheet of corrugated cardboard having one smooth surface and also one surface of a sheet of kraft or other strong paper or the like, as well as one surface of a sheet of foamed material. There now follow successively the steps of sticking the coated surface of the sheet of paper upon the flutings of the sheet of cardboard, sticking the uncoated surface of the sheet of foamed material upon the coated surface of the sheet of cardboard, and sticking the sheet of covering material or fabric upon the coated surface of the sheet of foamed material. Then the sandwich thus obtained is inverted and placed in a mould, in which by the closing of the mould cover there is effected the compression of the panel together with its shaping and the polymerisation of the elastomer therein. A frequent problem with such articles is that delamination occurs in the concave areas. When the lamination is performed, the fabric is forced into the concavities by a male die or mold, creating some tension in the fabric. The fabric then pulls against the lamination adhesive after the die is removed. Often the foam will then separate from the substrate. This is called bridging. It can occur immediately upon release from the mold or it can occur days, weeks, or months later. It detracts significantly from the appearance of the product. To overcome the problem, it is common practice to use high stretch fabrics, which exert less of a pull on the adhesive but which generally are more expensive than less elasticized fabrics. Even then delamination sometimes occurs.

### Disclosure of Invention

The process of this invention laminates fabric to a substrate with little or no tension resulting in the fabric and, therefore, with a substantially reduced likelihood of bridging occurring, even when a non-elasticized fabric is used. The process comprises the following steps:
(a) coating the back of the fabric with a layer of heat activatable adhesive;
(b) placing the fabric against the concave side of the substrate, with the adhesive next to the substrate;
(c) preheating a male die having a complementary shape to that of the concave substrate, said die being perforated across substantially its entire contact surface;
(d) pressing the preheated die against the face of the fabric so as to push the fabric into the concave areas of the substrate;
(e) ejecting a shot of superheated steam through the perforations in the male die at a pressure sufficient to drive the vapor through the fabric, thereby activating the adhesive and relaxing those areas of the fabric that are under tension;
(f) cooling the adhesive while maintaining the die pressure against the fabric, until the adhesive has set, thereby laminating the fabric to the substrate; and
(g) disengaging the die and the resultant laminated composition.

Even if not elasticized, the fabric is stretched in the areas where the male die pushes it into the concavities. But by use of the superheated steam, the resulting tension in the fabric is then relieved, without shrinking the fabric back to its original shape. Thus the fabric takes on a new shape -- that of the concavity -- and does not pull against the adhesive bonds later. This process is especially useful in providing complete and long-lasting lamination where a concavity is formed by the meeting of three planes, e.g., as in each of the four corners of an automobile headliner, as well as in the headliner recesses for sun visors.

By preheating the male die and using superheated steam to activate the adhesive, vapor condensation on the fabric can be avoided. This reduces or eliminates spotting of the decorative face of the fabric. Precisely how hot the die needs to be depends upon the activation temperature of the adhesive. Preferably, the die temperature will be high enough to warm the adhesive to near its activation temperature. For most adhesives it will be preferred that the surface temperature of the die be below the adhesive's activation temperature but within about 16,7 °C (30 Fahrenheit degrees) thereof, e.g., about 11,1 to 16,7 °C (about 20 to 30 Fahrenheit degrees) below the activation temperature of the adhesive. A die temperature of about 82,2 to 93,3 °C (about 180 to 200° F) often is preferred. The preferred means of preheating the die is by use of electrical resistance heaters.

Superheated steam is steam that exists at a temperature greater than the saturation temperature corresponding to its pressure. The temperature, pressure, flow rate, and duration of ejection of the steam into the fabric are to a certain extent interrelated. The pressure should be high enough to drive the vapor through the fabric. The combination of pressure, temperature, and time should be such that the adhesive will be activated across substantially the entire contact surface of the substrate and the tension in the fabric in the concave areas will be relaxed. Also, it is preferred that the conditions be such that the foam backing in these areas, if such is used, reach a high enough temperature that it will soften slightly, allowing it to conform to the shape of the substrate without tension. Usually the steam will have to have a temperature in the range of about 204,4 to 315,5 °C (about 400 to 600° F) and a pressure of about 517 to 586 kPa (about 75 to 85 pounds per square inch gauge (psig)). (This is as measured before the steam contacts the die surface.)

The perforations in the die should be relatively small, e.g., having a diameter in the range of about 0,0762 to 0,203 cm (about 0.030 to 0.080 inch). There should be enough of the perforations, and they should be spaced closely enough together, to ensure relatively uniform heating of the adhesive. The smaller the perforations, the closer together they should be. Generally, the perforations should be spaced not more than about 1,9 cm (about 3/4 inch) apart.

Suitable apparatus for practicing the process of the present invention are disclosed in International Applications No. PCT/US 86/02807, filed December 30, 1986 ("Apparatus for Laminating and Shaping Foam ") and No. PCT/US 87/01111, filed May 18, 1987 ("Apparatus and Process for Shaping and Covering Cushion Foam").

Fabrics that can be used in the process of the present invention include both knits and woven fabrics. The fabric needs to be gas-permeable, however, so as to allow the superheated vapor to pass through it. Circular jersey knits, raschel knits, and tricot warp knits can be used. Suitable woven fabrics include twills, flat wovens, and velours. The fibers of which the fabrics are made may be polyester, nylon, rayon, wool, cotton, or elastomeric, i.e. "stretch", fibers--alone or in various blends. Preferably the fabric will be stretchable by a factor of at least about 5 percent, e.g., about 5 to 20 percent. This refers to the amount the fabric can be stretched at room temperature, without being permanently distorted.

The fabric may be backed or plain. Foam-backed fabrics often are preferred in such products. The foam normally is an open cell, thermoplastic, cushion foam, e.g., a polyurethane or polyolefin foam. Polyether-based polyurethanes and polyester-based polyurethanes can both be used. For automobile headliners the polyether-based polyurethanes hold up better, especially in hot climates, and are much preferred. Polyethylene is the most common form of polyolefin foam used as fabric backing. Polyester-based polyurethane foams often have melting points in the range of about 149 to 163 °C (about 300 to 325° F). Polyether-based polyurethanes melt higher, usually in the range of about 191 to 232 °C (about 375 to 450° F). Polyolefin foams usually have melt points somewhere in the range of about 163 to 204,4 °C (about 325 to 400° F). Preferably the foam will have a melting point higher than the activation temperature of the adhesive.

The only limitation on foam thickness is that it must be thin enough that the superheated vapor can penetrate the foam adequately to activate the adhesive next to the substrate. Usually the foam will have a thickness of about one inch or less, often no more than about 0,48 cm (about 3/16 inch).

Foam-backed fabrics are well known in the art and can be manufactured by a number of different methods. Perhaps the most common method in use today is flame lamination. This entails passing a sheet of foam over an open flame to cause the sheet to become tacky on the bottom surface, and then pressing the tacky surface against the back of the fabric, using nip rollers.

The adhesive used to laminate the fabric to the substrate is a fabric adhesive which is activated at an elevated temperature, e.g., about 60 °C (about 140°F.) or above. Adhesives that are substantially solid at room temperature are preferred. It also is preferred that the adhesive be thermoplastic, i.e., can be remelted after once being set. The activation temperature of the adhesive should be low enough that the fabric will not be damaged. (Some fabrics can withstand temperatures as high as about 177 °C (about 350° F., for short periods of time, without significant damage.) Different adhesives may be preferred for different fabrics. Most often, however, the adhesive will have an activation temperature within the range of about 88 to 132 °C (about 190 to 270° F). Use of a thermoplastic adhesive that melts in the range of about 99 to 121 °C (about 210 to 250° F.) is most preferred. Thermoplastic polyamide adhesives are quite effective.

A normally solid adhesive can be applied to the fabric in particulate form, as a film, or as a web. Preferably, it will be applied to the fabric in particulate form, i.e., it will be sprinkled on the fabric. This method of application permits greater uniformity of the adhesive coating than, for example, spray application of a liquid adhesive permits. The difference can be important in obtaining a smooth, even appearance in the final product. A commonly used prior art method of laminating a fabric to an automobile headliner shell involves the spraying of liquid adhesive on the rigid shell, following which the shell is sent through an oven to make the adhesive tacky. The shell then is placed in a female mold and fabric is laid over it. A male die is pressed against the fabric, but without the use of a superheated steam. The die either is unheated or is heated by conductive heat. In addition to the bridging problem mentioned above, this often results in uneven application of the adhesive. If the adhesive layer is excessively thick in an area where there are imperfections, such as grooves or indentations, in the surface of the substrate, the imperfections will show through the fabric in the finished product. By using a powdered adhesive, e.g., having a particle size of about 100 to 400 µm (microns), we are able to apply the coating with an accuracy of about ± 1,08 g/m² (about ± 0.1 gram/square foot), which makes for a smoother finish in the final product.

Another advantage in using a particulate adhesive is that it results in less waste. Spray application can result in a loss of as much as 30 percent of a liquid adhesive, due to spray falling beyond the edges of the substrate and to run-off. Spraying also releases more fumes than the sprinkling of powdered adhesive does. Some of these fumes can be unhealthy for humans or otherwise dangerous. Relatively high melting adhesives that can be used in the present process sometimes could not be used in prior art laminations due to the risk of damage to the decorative facing fabric. Conductive heat having a temperature high enough to melt a normally solid adhesive underneath a foam-backed fabric often must be so hot it degrades the appearance or strength of the fabric. In the present process, however, small diameter jets of super-heated steam, hot enough to melt the underlying adhesive, may pass through the fabric without damaging it. Indeed, if, in the present process, the temperature of the male die is kept below the melt point of the adhesive, then the surface temperature of the fabric generally will also remain lower than the adhesive melt point. The thicker the fabric, the greater the temperature drop from adhesive to fabric face. Lamination using conductive heat produces the opposite result. The face of the die normally has to be heated to above the adhesive's activation point, because the fabric acts as an insulator. Thus the fabric is heated to at least as high a temperature as the adhesive, and usually higher. The present process permits the use of the more desirable hot melt adhesives, which often cannot be used in conductive heat lamination.

The substrate used can be any rigid material that will not melt or otherwise degrade when subjected to the action of the adhesive and vapor and the heat of the process. E.g., it can be made of metal, wood products, plastic, fiberglass, or rigid foam. It is preferred that the substrate be gas-permeable, so as to allow cooling air to be pulled through it after the fabric has been stretched and the adhesive activated. The process is especially useful, for example, in laminating a foam-backed fabric to a contoured, compressed sheet of loose fibers bound together, e.g., glass fibers or textile waste (also known as "shoddy"). The binder used is preferably a thermoset resin, e.g., a phenolic resin, such a a phenolformaldehyde condensation resin. Examples of such sheets, and methods of producing them, are disclosed in U.S. Patents No. 4,337,049 to Miller, No. 4,385,955 to Doerfling et al., and No. 4,466,848 to Ogawa.

In an alternative method of practicing the process of the present invention, rather than use a foam-backed fabric as a starting material, separate sheets of foam and fabric can be glued together simultaneously with the lamination of the foam to the concave substrate. In this three-ply lamination the fabric is placed over one side of the foam with a first layer of a thermally activated adhesive in between the fabric and the foam; then the exposed side of the foam is coated with a second layer of a thermally activated adhesive. Generally the same requirements apply for the adhesive used between the fabric and foam as for that used between the foam and the rigid substrate. It is preferred, however, that a higher activation temperature adhesive be used between the fabric and the foam. Advantageously, the difference in activation temperature of the two adhesives will be in the range of about 11,1 to 27,8 °C (about 20 to 50 Fahrenheit degrees). The fabric preferably will be somewhat elastic, e.g., having a stretch value of at least about ten percent. The layered composite of fabric, adhesive, and foam is placed against the concave side of the substrate, with the second layer of adhesive next to the substrate. The remainder of the process is the same, with the die temperature preferably being within (about 16,7 °C) (about 30 Fahrenheit degrees) of the activation temperature of the adhesive between the fabric and the foam.

### Brief Description of Drawings

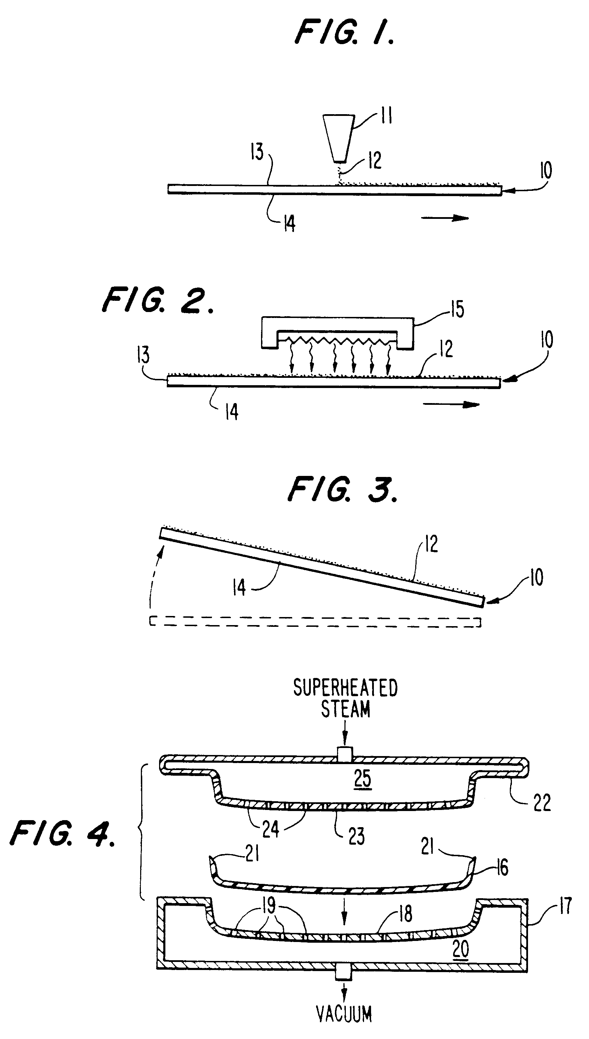

For a fuller understanding of the process of the present invention, reference is made to the drawings that accompany this specification. Figures 1-7 schematically depict the preparation of a covered automobile headliner using the process of the present invention.

### Best Mode for Carrying Out The Invention

In Figure 1 a sheet of foam-backed fabric 10 is conveyed under a hopper 11, from which a powdered thermoplastic adhesive 12 is uniformly sprinkled over the surface of the foam 13. The adhesive is applied at a rate of 18 grams per square meter. The adhesive is a polyamide having a melt point of approximately 104 °C (220° F). Foam 13 is a sheet of open celled, polyether-based polyurethane, one-eighth inch thick. It is laminated to a decorative facing fabric 14, which is a woven blend of polyester and Lycra® spandex.

In Figure 2 foam-backed fabric 10 is conveyed past a radiant heater 15, which heats the powdered adhesive 12 just until it becomes tacky enough to stick to the foam 13.

In Figure 3 foam-backed fabric 10 is turned over so that the decorative facing fabric 14 is on the top.

In Figure 4 a rigid shell 16 for an automobile headliner is lowered into female die 17. The entire contact surface 18 of female die 17 is perforated with holes 19, which have a diameter of 0,101 cm (0.040 inch) and are spaced 1,27 cm (1/2 inch) apart. The enclosed cavity 20 behind female die surface 18 is connected to means (not shown) for pulling a vacuum. The concave shape of the contact surface 18 of female die 17 corresponds to that of headliner shell 16. Shell 16 is made of slightly compressed fiberglass, bound together with a thermoset phenol-formaldehyde resin. The porous shell measures about 60 inches wide by about 110 inches long and is approximately 1,43 cm (9/16 inch) thick except at the edges 21, where it narrows to a thickness of about 0,318 cm (about 1/8 inch,) Poised above female mold 17 and headliner shell 16 is male die 22. The entire contact surface 23 of die 22 also is perforated, by holes 24, which are the same in size and spacing as holes 19 in female die 17. The contour of male die 22 is complementary to that of female die 17. Behind contact surface 23 of die 22 is an enclosed chamber 25, which is in communication with a source (not shown) of superheated steam having a temperature of about 232 °C (about 450° F.) and a pressure of about 549 kPa (about 80 psig).

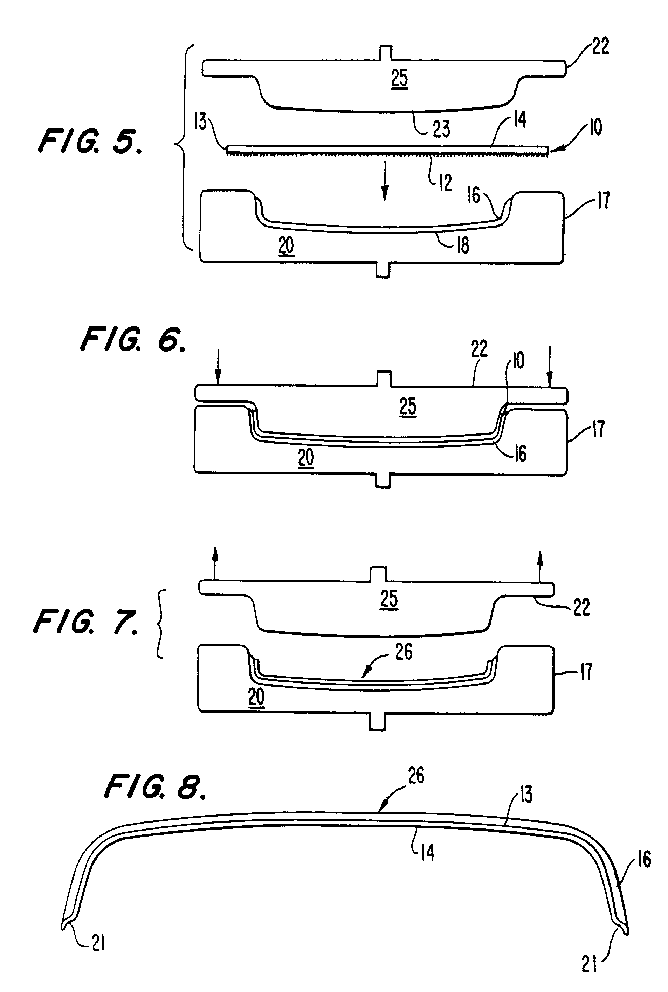

In Figure 5 adhesive-coated fabric 10 (from Figure 3) is laid on top of headliner shell 16. The exposed layer of adhesive 12 is thereby sandwiched between foam backing 13 and headliner shell 16. Both die contact surfaces 18 and 23 are preheated by electrical resistance heaters (not shown) to a temperature of approximately 200° F.

In Figure 6 male die 22 is shown fully lowered into female die 17, thereby compressing foam-backed fabric 10 into tight engagement with concave headliner shell 16. When the dies are fully closed, the superheated steam is admitted to chamber 25, from whence it is ejected through the perforations 24 in male die 22. The steam ejection is continued for approximately 15 seconds. At about the 14th second a vacuum of approximately 1250 cubic feet per minute, at 7 inches of water, is pulled on female die 17 and is continued for about 6 seconds. As the vacuum is applied to female die 17, ambient air is pulled through foam-backed fabric 10 and headliner shell 16 through the gap around the peripheries of dies 17 and 22. The ejected steam heats the adhesive 12 to melting; the air purge helps cool and resolidify the adhesive. In only 20 seconds, lamination is complete; then, as shown in Figure 7, male die 22 is raised, permitting the removal of the finished headliner 26 from female die 17. (A comparable prior art process would require a press time of approximately 45 to 60 seconds.).

Figure 8 shows an enlarged view of the finished headliner 26, turned over from the position it occupied in female die 17. This is the orientation the headliner will have in an automobile, with the decorative facing fabric 14 on the underside.

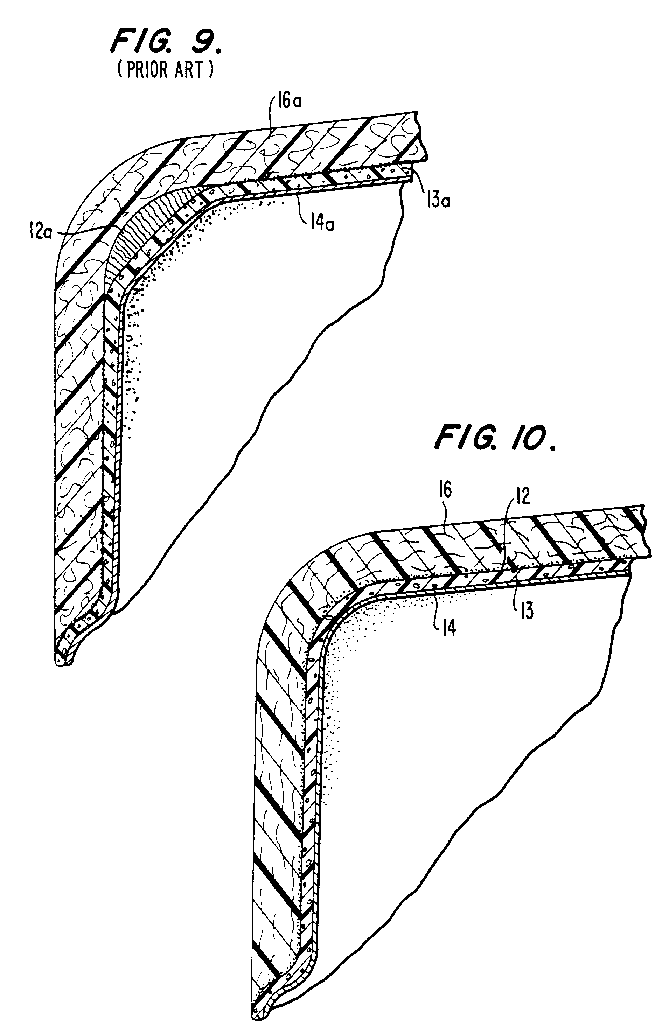

Figure 10 is a life-size perspective view, in partial cross-section, of one of the four corners of the finished headliner shown in Figure 8. Resilient foam backing 13 adheres tightly and uniformly to porous fiberglass shell 16, while decorative facing fabric 13 remains completely laminated to the foam. In contrast thereto, Figure 9 depicts a corner of a prior art headliner formed of the same materials, but using conductive heat and a liquid adhesive, rather than superheated steam and powdered adhesive. As can be seen, after removal of the headliner from the mold, the adhesive 12a has given way and foam 13a is loose in the corner of shell 16a.

It is contemplated that the process depicted in Figures 1-8 can be performed in a semi-continuous manner using a roll (not shown) of foam-backed fabric 10, which would remain uncut until the pressing step (Figure 6). Each side edge of the fabric might be held by a row of upstanding pins carried by a conveyor belt (not shown). In this manner the fabric can be held taut while it is pressed into the female die, so as to lessen the chance of wrinkling.

In making automobile headliners and the like, the process of the present invention allows the fabric to conform more closely to the contour of the substrate, even when the substrate has relatively deep concavities. This frees the manufacturer to use a broader array of designs than can be implemented with prior art processes.

## Claims

1. A process of laminating a piece of fabric to a concave, rigid substrate, wherein the fabric is gas-permeable, comprising the following steps:
a) coating the back of the fabric (10) with a layer of heat activatable adhesive (12);
b) placing the fabric (10) against the concave side of the substrate (16) , with the adhesive (12) next to the substrate;
c) preheating a male die (22) having a complementary shape to that of the concave substrate (16), said die being perforated across substantially its entire contact surface;
d) pressing the preheated die (22) into the substrate (16) so as to push the adhesive-coated fabric (10) into the concave areas of the substrate, thereby placing the fabric under tension in those areas;
e) ejecting a shot of superheated steam through the perforations in the male die (22) at a pressure sufficient to drive the steam through the fabric (10), the temperature of the steam being high enough to activate the adhesive (12) across substantially the entire contact surface and to relax those areas of the fabric that are under tension;
f) cooling the adhesive while maintaining the die pressure against the substrate, until the adhesive has set, thereby laminating the fabric to the substrate (16); and
g) disengaging the die (22) and the resultant laminated composition.

2. The process of claim 1 wherein the adhesive is substantially solid at room temperature.

3. The process of claim 1 wherein the fabric (10) has a backing or open cell cushion foam (13).

4. The process of claim 3 wherein, in step (d), the substrate (16) rests in a female die (17) having a shape corresponding to that of the male die (22), and the steam is at a temperature of about 204 to 316 °C (400 to 600°F). and a pressure of about 517 to 586 kPa (75 to 85 pounds per square inch gauge).

5. The process of claim 4 wherein, in step (f), the adhesive is cooled by passing a cooling gas through the fabric (10).

6. The process of claim 5 wherein the cooling gas is air.

7. The process of claim 1 wherein the substrate (16) is a contoured sheet of loose fibers bound together.

8. The process of claim 1 wherein the substrate (16) is a contoured sheet of loose glass fibers glued together.

9. The process of claim 3 wherein the substrate (16) is a gas-permeable, contoured sheet of loose glass fibers bound together.

10. The process of claim 6 wherein the substrate (16) is a gas-permeable, contoured sheet of loose glass fibers bound together with a thermoset resin.

11. The process of claim 3 wherein the adhesive is thermoplastic and, in step (c), the male die (22) is preheated to a temperature above room temperative but below the melting point of the adhesive (12).

12. The process of claim 10 wherein the adhesive (12) is thermoplastic and, in step (c), the male die (22) is preheated to a temperature below the melting point of the adhesive (12) but within about 16,7 °C (30 Fahrenheit degrees) thereof.

13. The process of claim 11 wherein the adhesive (12) used in step (a) is in particulate form and melts somewhere in the range of about (88 to 132 °C (190 to 270 °F.) and, prior to performing step (b), the adhesive coating (12) is heated until it becomes tacky and sticks to the foam backing.

14. The process of claim 12 wherein the adhesive (12) used in step (a) is in particulate form and melts somewhere in the range of about 88 to 132°C (190 to 270 °F.) and, prior to performing step (b), the adhesive coating is heated until it becomes tacky and sticks to the foam backing.

15. The process of claim 6 wherein the female die (17) is perforated across substantially its entire contact surface and, in step (f), the air is passed through the fabric (10) by pulling a vacuum through the perforations in the female die (17).

16. The process of claim 14 wherein the female die (17) is perforated across substantially its entire contact surface and, in step (f), the air is passed through the fabric (10) by pulling a vacuum through the perforations in the female die.

17. The process of claim 6 wherein the foam is composed of a polyurethane resin and the adhesive used in step (a) is a polyamide melting somewhere in the range of about 99 to 121 °C (210 to 250°F).

18. The process of claim 16 wherein the foam is composed of a polyurethane resin and the adhesive used in step (a) is a polyamide melting somewhere in the range of about 99 to 121°C (210 to 250°F).

19. The process of claim 15 wherein the fabric is a foam-backed woven fabric having a stretch value of at least about 5 percent.

20. The process of claim 16 wherein the fabric is a foam-backed woven fabric having a stretch value of at least about 5 percent.

21. The process of claim 18 wherein the fabric is a foam-backed woven fabric have a stretch value of at least about 5 percent.

22. The process of claim 21 wherein the foam is a polyether-based polyurethane having a thickness of about 0.48 cm (3/16 inch) or less.

23. A process of laminating a gas-permeable fabric to a sheet of open cell cushion foam, while simultaneously laminating the foam to a concave, rigid substrate, comprising the following steps:
a) placing the fabric (10) over one side of the foam (13) with a first layer of a heat activatable adhesive in between the fabric and the foam, the adhesive having an activation temperature lower than the melting point of the foam;
b) coating the second side of the foam (13) with an exposed layer of a hot melt adhesive, the adhesive having an activation temperature lower than the melting point of the foam;
c) placing the layered composite of fabric, adhesive, and foam against the concave side of the substrate (16), with the exposed layer of adhesive next to the substrate;
d) preheating a male die (22) having a complementary shape to that of the concave substitute, said die being perforated across substantially its entire contact surface;
e) pressing the preheated die (22) into the substrate so as to compress the composite between the die and the substrate and push the composite into the concave areas of the substrate, thereby placing the fabric under tension in those areas;
f) ejecting a shot of superheated stream through the perforations in the male die (22) at a pressure sufficient to drive the steam through the fabric and the foam, the temperature of the steam being high enough to activate both layers of adhesive across substantially the entire contact surface and to relax those areas of the fabric (10) that are under tension;
g) cooling both layers of adhesive while maintaining the die pressure against the substrate (16) until the adhesive has set, thereby laminating the foam (13) to the substrate (16) and the fabric (10) to the foam (13); and
h) disengaging the die (22) and the resultant laminated composition.

24. A process of laminating a gas-permeable fabric to a sheet of open cell cushion foam, while simultaneously laminating the foam to a concave, gas-permeable, rigid sheet of loose glass fibers bound together, comprising the following steps:
a) placing the fabric (10) over one side of the foam (13) with a first layer of a normally solid, thermoplastic adhesive in between the fabric and the foam, the adhesive having a melting point lower than that of the foam and somewhere in the range of about 88 to 132 °C (190 to 270° F.);
b) coating the second side of the foam (13) with an exposed layer of a normally solid, thermoplastic adhesive having a melting point lower than that of the foam and somewhere in the range or about 88 to 132 °C (190 to 270° F.);
c) heating the exposed layer of adhesive until it becomes tacky and sticks to the foam;
d) placing the layered composite of fabric, foam, and adhesives against the concave side of the fiberglass sheet (16), with the exposed layer of adhesive next to the fiberglass sheet;
e) preheating a male die (22) having a complementary shape to that of the concave fiberglass sheet to a temperature above room temperature but lower than the melting points of the adhesives in the composites, said die being perforated across substantially its entire contact surface;
f) pressing the preheated male die (22) into the fiberglass sheet (16), while the fibreglass sheet rests in a female die (17) having a shape corresponding to that of the male die (22) , so as to compress the composite between the male die and the fiberglass sheet and push the composite into the concave areas of the substrate, thereby placing the fabric under tension in those areas, said female die also being perforated across substantially its entire contact surface;
g) ejecting a shot of superheated steam at a temperature of about 204,4 to 315,5 °C (400 to 600°F.) and a pressure of about 517 to 586 kPa (75 to 85 pounds per square inch gauge) through the perforations in the male die (22) for a time sufficient to melt both layers of adhesive across substantially the entire contact surface and to relax those areas of the fabric (10) that are under tension;
h) pulling ambient air through the perforations in the female die (17), while maintaining the die pressure against the substrate (16), until both layers of adhesive have resolidified, thereby laminating the foam (13) to the fiberglass sheet (16) and the fabric (10) to the foam (13); and
i) disengaging the dies (17,22) and withdrawing the resultant laminated composition.

25. The process of claim 24 wherein the fibers are randomly oriented in the fiberglass sheet (16), the binder holding the fibers together is a phenolic resin, the foam is a polyurethane foam, and the first layer of adhesive has a melt point about 11,1 to 27,8 °C (20 to 50 Fahrenheit degrees) higher than that of the exposed layer of adhesive.

26. The process of claim 25 wherein the adhesive in both layers consists essentially of a polyamide resin, the foam consists essentially of a polyether-based polyurethane, and the binder holding the fibers together consists essentially of a phenol-formaldehyde resin.

27. The process of claim 26 wherein the fabric has a stretch value of at least about 10 percent.

## Patentansprüche

1. Verfahren zum Laminieren eines Gewebestücks auf eine konkave, feste Unterlage, wobei das Gewebe gasdurchlässig ist, das die folgenden Schritte aufweist:
a) Beschichten der Rückseite des Gewebes (10) mit einer Schicht wärmeaktivierbaren Klebers (12);
b) Aufbringen des Gewebes (10) gegen die konkave Seite der Unterlage (16) mit dem Kleber (12) zur Unterlage hin;
c) Vorheizen eines Positivformwerkzeugs (22) mit einer zur konkaven Unterlage (16) komplementären Form, wobei das Formwerkzeug im wesentlichen über seine gesamte Kontaktoberfläche perforiert ist;
d) Pressen des vorgeheizten Formwerkzeugs (22) in die Unterlage (16), um so das kleberbeschichtete Gewebe (10) in die konkaven Bereiche der Unterlage zu drücken, wodurch das Gewebe unter Zugspannung in diese Bereiche gedrückt wird;
e) Ausstoßen eines Strahls überhitzten Dampfes durch die Bohrungen in dem Positivformwerkzeug (22) mit einem Druck, der ausreicht, den Dampf durch das Gewebe (10) zu drücken, wobei die Temperatur des Dampfs hoch genug ist, um den Kleber (12) im wesentlichen über die gesamte Kontaktoberfläche zu aktivieren und die Bereiche des Gewebes zu entspannen, die unter Zugspannung stehen;
f) Kühlen des Klebers, während der Formwerkzeugdruck gegenüber der Unterlage beibehalten wird, bis der Kleber fest geworden ist, wodurch das Gewebe auf die Unterlage (16) laminiert wird; und
g) Freigeben des Formwerkzeugs (22) und des entstandenen Laminataufbaus.

2. Verfahren nach Anspruch 1, wobei der Kleber bei Raumtemperatur im wesentlichen fest ist.

3. Verfahren nach Anspruch 1, wobei das Gewebe (10) eine rückseitige Verstärkung mit offenzelligen Polsterschaum (13) aufweist.

4. Verfahren nach Anspruch 3, wobei in Schritt (d) die Unterlage (16) in einem Negativformwerkzeug (17) liegt, das eine Form hat, die dem Positivformwerkzeug (22) entspricht, und wobei der Dampf eine Temperatur von ungefähr 204 bis 316°C (400 bis 600°F) und einen Druck von 517 bis 586 kPA (75 bis 85 pounds per square inch gauge) aufweist.

5. Verfahren nach Anspruch 4, wobei in Schritt (f) der Kleber durch Durchleitung eines Kühlgases durch das Gewebe (10) gekühlt wird.

6. Verfahren nach Anspruch 5, wobei das Kühlgas Luft ist.

7. Verfahren nach Anspruch 1, wobei die Unterlage (16) eine konturierte Schicht loser Fasern ist, die miteinander verbunden sind.

8. Verfahren nach Anspruch 1, wobei die Unterlage (16) eine konturierte Schicht loser Glasfasern ist, die miteinander verleimt sind.

9. Verfahren nach Anspruch 3, wobei die Unterlage (16) eine gasdurchlässige konturierte Schicht loser Glasfasern ist, die miteinander verbunden sind.

10. Verfahren nach Anspruch 6, wobei die Unterlage (16) eine gasdurchlässige konturierte Schicht loser Glasfasern ist, die durch ein warnhärtendes Harz miteinander verbunden sind.

11. Verfahren nach Anspruch 3, wobei der Kleber (12) thermoplastisch ist und in Schritt (c) das Positivformwerkzeug (22) auf eine Temperatur über der Raumtemperatur, aber unterhalb der des Schmelzpunkts des Klebers (12) aufgeheizt ist.

12. Verfahren nach Anspruch 10, wobei der Kleber (12) thermoplastisch ist und in Schritt (c) das Positivformwerkzeug (22) auf eine Temperatur unterhalb des Schmelzpunkts des Klebers (12) aufgeheizt ist, aber innerhalb 16,7°C (30°F) davon liegt.

13. Verfahren nach Anspruch 11, wobei der in Schritt (a) verwendete Kleber (12) in Partikelform vorliegt und in etwa in dem Bereich von 88 bis 132°C (190 bis 270°F) schmilzt und wobei vor der Ausführung des Schritts (b) die Kleberbeschichtung (12) aufgeheizt wird, bis sie klebrig wird und auf dem Schaumrücken haftet.

14. Verfahren nach Anspruch 12, wobei der in Schritt (a) verwendete Kleber (12) in Partikelform vorliegt und in etwa in dem Bereich von 88 bis 132°C (190 bis 270°F) schmilzt und wobei vor der Ausführung des Schritts (b) die Kleberbeschichtung (12) aufgeheizt wird, bis sie klebrig wird und auf dem Schaum haftet.

15. Verfahren nach Anspruch 6, wobei das Negativformwerkzeug (17) im wesentlichen über seine gesamte Kontaktoberfläche perforiert ist und wobei in Schritt (f) die Luft durch das Gewebe (10) durch Ziehen eines Vakuums durch die Bohrungen im Negativformwerkzeug (17) geleitet wird.

16. Verfahren nach Anspruch 14, wobei das Negativformwerkzeug (17) im wesentlichen über seine gesamte Kontaktoberfläche perforiert ist und wobei in Schritt (f) die Luft durch das Gewebe (10) durch Ziehen eines Vakuums durch die Bohrungen im Negativformwerkzeug (17) geleitet wird.

17. Verfahren nach Anspruch 6, wobei der Schaum aus einem Polyurethanharz besteht und der in Schritt (a) verwendete Kleber ein Polyamid ist, das in etwa in dem Bereich von 99 bis 121°C (210 bis 250°F) schmilzt.

18. Verfahren nach Anspruch 16, wobei der Schaum aus einem Polyurethanharz besteht und der in Schritt (a) verwendete Kleber ein Polyamid ist, das in etwa in dem Bereich von 99 bis 121°C (210 bis 250°F) schmilzt.

19. Verfahren nach Anspruch 15, wobei das Gewebe ein schaumverstärktes Webgewebe ist, das einen Streckwert von mindestens 5% aufweist.

20. Verfahren nach Anspruch 16, wobei das Gewebe ein schaumverstärktes Webgewebe ist, das einen Streckwert von mindestens 5% aufweist.

21. Verfahren nach Anspruch 18, wobei das Gewebe ein schaumverstärktes Webgewebe ist, das einen Streckwert von mindestens 5% aufweist.

22. Verfahren nach Anspruch 21, wobei der Schaum ein auf Polyether basierendes Polyurethan ist, der eine Dicke von ungefähr 0,48 cm (3/16 inch) oder weniger aufweist.

23. Verfahren zur Lamination eines gasdurchlässigen Gewebes auf eine Schicht offenzelligen Polsterschaums, während gleichzeitig der Schaum auf eine konkave, feste Unterlage laminiert wird, das die folgenden Schritte aufweist:
a) Aufbringen des Gewebes (10) über eine Seite des Schaums (13) mit einer ersten Lage eines wärmeaktivierbaren Klebers zwischen dem Gewebe und dem Schaum, wobei der Kleber eine Aktivierungstemperatur aufweist, die niedriger als der Schmelzpunkt des Schaums ist;
b) Beschichten der zweiten Seite des Schaums (13) mit einer Außenschicht eines Heißschmelzklebers, wobei der Kleber eine Aktivierungstemperatur aufweist, die niedriger als der Schmelzpunkt des Schaums ist;
c) Aufbringen des geschichteten Aufbaus aus Gewebe, Kleber und Schaum gegen die konkave Seite der Unterlage (16) mit der Außenschicht des Klebers zur Unterlage hin;
d) Vorheizen eines Positivformwerkzeugs (22), das eine komplementäre Form zu dem des konkaven Gegenstücks hat, wobei das Formwerkzeug im wesentlichen über seine gesamte Kontaktoberfläche perforiert ist;
e) Pressen des vorgeheizten Formwerkzeugs (22) in die Unterlage (16), um so den Aufbau zwischen dem Formwerkzeug und der Unterlage zusammenzupressen und den Aufbau in die konkaven Bereiche der Unterlage zu drücken, wodurch das Gewebe unter Zugspannung in diese Bereiche gedrückt wird;
f) Ausstoßen eines Strahls überhitzten Dampfes durch die Bohrungen in dem Positivformwerkzeug (22) mit einem Druck, der ausreicht, den Dampf durch das Gewebe und den Schaum zu drücken, wobei die Temperatur des Dampfs hoch genug ist, um beide Kleberschichten im wesentlichen über die gesamte Kontaktoberfläche zu aktivieren und die Bereiche des Gewebes (10) zu entspannen, die unter Zugspannung stehen;
g) Kühlen beider Kleberschichten, während der Formwerkzeugdruck gegenüber der Unterlage (16) beibehalten wird, bis der Kleber fest geworden ist, wodurch der Schaum (13) auf die Unterlage (16) und das Gewebe (10) auf den Schaum (13) laminiert wird; und
h) Freigeben der Werkzeugform (22) und des entstandenen Laminataufbaus.

24. Verfahren zur Lamination eines gasdurchlässigen Gewebes auf eine Schicht offenzelligen Polsterschaums, während gleichzeitig der Schaum auf eine konkave, gasdurchlässige, feste Unterlage aus losen Glasfasern, die miteinander verbunden sind, laminiert wird, das die folgenden Schritte aufweist:
a) Aufbringen des Gewebes (10) über eine Seite des Schaums (13) mit einer ersten Lage eines normalerweise festen thermoplastischen Klebers zwischen dem Gewebe und dem Schaum, wobei der Kleber einen Schmelzpunkt aufweist, der niedriger als der Schmelzpunkt des Schaums ist und in etwa in dem Bereich von 88 bis 132°C ( 190 bis 270°F) liegt;
b) Beschichten der zweiten Seite des Schaums (13) mit einer Außenschicht eines normalerweise festen, thermoplastischen Klebers, wobei der Kleber einen Schmelzpunkt aufweist, der niedriger als der Schmelzpunkt des Schaums ist und in etwa in dem Bereich von 88 bis 132°C ( 190 bis 270°F) liegt;
c) Aufheizen der Außenschicht des Klebers, bis sie klebrig wird und auf dem Schaum haftet;
d) Aufbringen des geschichteten Aufbaus aus Gewebe, Schaum und Klebern gegen die konkave Seite der Glasfaserschicht (16) mit der Außenschicht des Klebers zur Glasfaserschicht hin;
e) Vorheizen eines Positivformwerkzeugs (22), das eine komplementäre Form zu dem der konkaven Glasfaserschicht hat, auf eine Temperatur über der Raumtemperatur, aber unterhalb der Schmelzpunkte der Kleber in den Aufbauten, wobei das Formwerkzeug im wesentlichen über seine gesamte Kontaktoberfläche perforiert ist;
f) Pressen des vorgeheizten Positivformwerkzeugs (22) in die Glasfaserschicht (16), während die Glasfaserschicht in einem Negativformwerkzeug (17) liegt, das eine zum Positivformwerkzeug (22) korrespondierende Form hat, um so den Aufbau zwischen dem Positivformwerkzeug und der Unterlage zusammenzupressen und den Aufbau in die konkaven Bereiche der Unterlage zu drücken, wodurch das Gewebe unter Zugspannung in diese Bereiche gedrückt wird und wobei das Negativformwerkzeug ebenfalls im wesentlichen über seine gesamte Fläche perforiert ist;
g) Ausstoßen eines Strahls überhitzten Dampfes mit einer Temperatur von ungefähr 204,4 bis 315,5°C (400 bis 600°F) und einem Druck von 517 bis 586 kPA (75 bis 85 pounds per square inch gauge) durch die Bohrungen in dem Positivformwerkzeug (22) für eine Zeit, die ausreicht, um beide Kleberschichten im wesentlichen über die gesamte Kontaktoberfläche zu schmelzen,und die Bereiche des Gewebes (10) zu entspannen, die unter Zugspannung stehen;
h) Ziehen von Umgebungsluft durch die Bohrungen in dem Negativformwerkzeug (17), während der Formwerkzeugdruck gegenüber der Unterlage (16) beibehalten wird, bis beide Kleberlagen wieder fest geworden sind, wodurch der Schaum (13) auf die Glasfaserschicht (16) und das Gewebe (10) auf den Schaum (13) laminiert wird; und
i) Freigeben der Formwerkzeuge (17, 22) und des entstandenen Laminataufbaus.

25. Verfahren nach Anspruch 24, wobei die Fasern in der Glasfaserschicht (16) zufällig verteilt sind, der Binder der die Fasern zusammenhält ein Phenolharz ist, der Schaum ein Polyurethanschaum ist, und die erste Kleberschicht einen Schmelzpunkt um circa 11,1 bis 27,8°C (20 bis 50°F) höher als den der äußeren Kleberschicht aufweist.

26. Verfahren nach Anspruch 25, wobei der Kleber in beiden Schichten im wesentlichen aus einem Polyamidharz besteht, der Schaum im wesentlichen aus einem Polyurethan auf Polyetherbasis besteht, und der Binder, der die Fasern zusammenhält, im wesentlichen aus einem Phenol-Formaldehydharz besteht.

27. Verfahren nach Anspruch 26, wobei das Gewebe einen Streckwert von mindestens 10% aufweist.

## Revendications

1. Procédé d'application par stratification d'un fragment de tissu sur un substrat concave rigide, dans lequel le tissu est perméable aux gaz, comprenant les étapes suivantes :
(a) revêtir l'arrière du tissu (10) d'une couche d'adhésif activable à la chaleur (12),
(b) placer le tissu (10) contre le côté concave du substrat (16), l'adhésif (12) étant proche du substrat,
(c) préchauffer une matrice mâle (22) ayant une forme complémentaire de celle du substrat concave (16), ladite matrice étant perforée sensiblement sur toute sa surface de contact,
(d) presser la matrice préchauffée (22) dans le substrat (16) de manière à pousser le tissu revêtu d'adhésif (10) dans les zones concaves du substrat, pour placer le tissu sous tension dans ces zones,
(e) éjecter une certaine quantité de vapeur surchauffée dans les perforations de la matrice mâle (22) à une pression suffisante pour entraîner la vapeur à travers le tissu (10), la température de la vapeur étant suffisamment élevée pour activer l'adhésif (12) sensiblement sur toute la surface de contact et pour détendre les zones du tissu qui sont sous tension,
(f) refroidir l'adhésif tout en maintenant la pression de la matrice contre le substrat, jusqu'à ce que l'adhésif ait durci, pour appliquer par stratification le tissu sur le substrat (16), et
(g) séparer la matrice (22) et la composition stratifiée résultante.

2. Procédé selon la revendication 1, dans lequel l'adhésif est sensiblement solide à la température ambiante.

3. Procédé selon la revendication 1, dans lequel le tissu (10) a une couche dorsale constituée par une mousse d'amortissement (13) à alvéoles ouverts.

4. Procédé selon la revendication 3, dans lequel, dans l'étape (d), le substrat (16) repose dans une matrice femelle (17) dont la forme correspond à celle de la matrice mâle (22), et la vapeur est à une température d'environ 204 à 316°C (400 à 600°F) et à une pression d'environ 517 à 586 kPa (75 à 85 livres/pouce carré manométrique).

5. Procédé selon la revendication 4, dans lequel, dans l'étape (f), l'adhésif est refroidi par passage d'un gaz de refroidissement à travers le tissu (10).

6. Procédé selon la revendication 5, dans lequel le gaz de refroidissement est l'air.

7. Procédé selon la revendication 1, dans lequel le substrat (16) est une feuille profilée de fibres lâches reliées entre elles.

8. Procédé selon la revendication 1, dans lequel le substrat (16) est une feuille profilée de fibres de verte lâches collées ensembles.

9. Procédé selon la revendication 3, dans lequel le substrat (16) est une feuille profilée, perméable aux gaz, de fibres de verte lâches liées entre elles.

10. Procédé selon la revendication 6, dans lequel le substrat (16) est une feuille profilée, perméable aux gaz, de fibres de verte lâches liées entre elles par une résine thermodurcissable.

11. Procédé selon la revendication 3, dans lequel l'adhésif (12) est thermoplastique et, dans l'étape (c), la matrice mâle (22) est préchauffée à une température supérieure à la température ambiante mais inférieure au point de fusion de l'adhésif (12).

12. Procédé selon la revendication 10, dans lequel l'adhésif (12) est thermoplastique et, dans l'étape (c), la matrice mâle (22) est préchauffée à une température inférieure au point de fusion de l'adhésif (12) mais située à environ 16,7°C (30°F) de celui-ci.

13. Procédé selon la revendication 11, dans lequel l'adhésif (12) utilisé à l'étape (a) est sous forme particulaire et fond à une température quelconque située dans la plage d'environ 88 à 132°C (190 à 270°F) et, avant de réaliser l'étape (b), le revêtement d'adhésif (12) est chauffé jusqu'à ce qu'il devienne collant et adhère à la couche dorsale de mousse.

14. Procédé selon la revendication 12, dans lequel l'adhésif (12) utilisé dans l'étape (a) est sous forme particulaire et fond à une température quelconque située dans la plage d'environ 88 à 132°C (190 à 270°F) et, avant de réaliser l'étape (b), le revêtement d'adhésif est chauffé jusqu'à ce qu'il devienne collant et adhère à la couche dorsale de mousse.

15. Procédé selon la revendication 6, dans lequel la matrice femelle (17) est perforée sensiblement sur toute sa surface de contact et, à l'étape (f), l'air est amené à traverser le tissu (10) par application d'un vide par les perforations de la matrice femelle (17).

16. Procédé selon la revendication 14, dans lequel la matrice femelle (17) est perforée sensiblement sur toute sa surface de contact et, à l'étape (f), l'air est amené à traverser le tissu (10) par application d'un vide par les perforations de la matrice femelle (17).

17. Procédé selon la revendication 6, dans lequel la mousse est constituée par une résine de polyuréthanne et l'adhésif utilisé dans l'étape (a) est un polyamide fondant à une température quelconque située dans la plage d'environ 99 à 121°C (210 à 250°F).

18. Procédé selon la revendication 16, dans lequel la mousse est constituée par une résine de polyuréthanne et l'adhésif utilisé dans l'étape (a) est un polyamide qui fond à une température quelconque située dans la plage d'environ 99 à 121°C (210 à 250°F).

19. Procédé selon la revendication 15, dans lequel le tissu est un tissu tissé à couche dorsale de mousse ayant un indice d'étirage d'au moins environ 5%.

20. Procédé selon la revendication 16, dans lequel le tissu est un tissu tissé à couche dorsale de mousse ayant un indice d'étirage d'au moins environ 5%.

21. Procédé selon la revendication 18, dans lequel le tissu est un tissu tissé à couche dorsale de mousse ayant un indice d'étirage d'au moins environ 5%.

22. Procédé selon la revendication 21, dans lequel la mousse est un polyuréthanne à base de polyéther ayant une épaisseur d'environ 0,48 cm (3/16 de pouce) ou moins.

23. Procédé pour appliquer par stratification un tissu perméable aux gaz sur une feuille de mousse d'amortissement à alvéoles ouverts, tout en appliquant simultanément par stratification la mousse sur un substrat concave rigide, comprenant les étapes suivantes :
(a) placer le tissu (10) sur un côté de la mousse (13) avec une première couche d'un adhésif activable par la chaleur entre le tissu et la mousse, l'adhésif ayant une température d'activation inférieure au point de fusion de la mousse,
(b) recouvrir le second côté de la mousse (13) d'une couche exposée d'un adhésif thermofusible, l'adhésif ayant une température d'activation inférieure au point de fusion de la mousse,
(c) placer le composite multicouche de tissu, d'adhésif et de mousse contre le côté concave du substrat (16), la couche exposée d'adhésif étant proche du substrat,
(d) préchauffer une matrice mâle (22) ayant une forme complémentaire de celle du substrat concave, ladite matrice étant perforée sensiblement sur toute sa surface de contact,
(e) presser la matrice préchauffée (22) dans le substrat de manière à comprimer le composite entre la matrice et le substrat et à pousser le composite dans les zones concaves du substrat pour mettre le tissu sous tension dans ces zones,
(f) éjecter une certaine quantité de vapeur surchauffée par les perforations de la matrice mâle (22) à une pression suffisante pour entraîner la vapeur à travers le tissu et la mousse, la température de la vapeur étant suffisamment élevée pour activer les deux couches d'adhésif sensiblement sur toute la surface de contact et pour détendre les zones du tissu (10) qui sont sous tension,
(g) refroidir les deux couches d'adhésif tout en maintenant la pression de la matrice contre le substrat (16) jusqu'à ce que l'adhésif soit solide, pour appliquer par stratification la mousse (13) sur le substrat (16) et le tissu (10) sur la mousse (13), et
(h) séparer la matrice (22) et la composition stratifiée résultante.

24. Procédé pour appliquer par stratification un tissu perméable aux gaz sur une feuille de mousse d'amortissement à alvéoles ouverts tout en appliquant simultanément par stratification la mousse sur une feuille concave, perméable aux gaz et rigide de fibres de verte lâches liées entre elles, comprenant les étapes suivantes :
(a) placer le tissu (10) sur un côté de la mousse (13) avec une première couche d'un adhésif thermoplastique normalement solide entre le tissu et la mousse, l'adhésif ayant un point de fusion inférieur à celui de la mousse et situé à une valeur quelconque dans la plage d'environ 88 à 132°C (190 à 270°F),
(b) recouvrir le second côté de la mousse (13) par une couche exposée d'un adhésif thermoplastique normalement solide ayant un point de fusion inférieur à celui de la mousse et situé à une valeur quelconque dans la plage d'environ 88 à 132°C (190 à 270°F),
(c) chauffer la couche exposée d'adhésif jusqu'à ce qu'elle devienne collante et adhère à la mousse,
(d) placer le composite multicouche de tissu, de mousse et d'adhésifs contre le côté concave de la feuille de fibres de verte (16), la couche exposée d'adhésif étant proche de la couche de fibres de verre,
(e) préchauffer une matrice mâle (22) ayant une forme complémentaire de celle de la couche de fibres de verte concave à une température supérieure à la température ambiante mais inférieure aux points de fusion des adhésifs dans les composites, ladite matrice étant perforée sensiblement sur toute sa surface de contact,
(f) presser la matrice mâle préchauffée (22) dans la couche de fibres de verte (16) tandis que la couche de fibres de verre repose dans une matrice femelle (17) ayant une forme correspondant à celle de la matrice mâle (22) de manière à comprimer le composite entre la matrice mâle et la feuille de fibres de verre et à pousser le composite dans les zones concaves du substrat pour mettre le tissu sous tension dans ces zones, ladite matrice femelle étant elle aussi perforée sensiblement sur toute sa surface de contact,
(g) éjecter une certaine quantité de vapeur surchauffée à une température d'environ 204,4 à 315,5°C (400 à 600°F) et à une pression d'environ 517 à 586 kPa (75 à 85 livres/pouce carré manométrique) à travers les perforations de la matrice mâle (22) pendant une durée suffisante pour faire fondre les deux couches d'adhésif sensiblement sur toute la surface de contact et pour détendre les zones du tissu (10) qui sont sous tension,
(h) aspirer l'air ambiant à travers les perforations de la matrice femelle (17) tout en maintenant la pression de la matrice contre le substrat (16) jusqu'à ce que les deux couches d'adhésif se soient resolidifiés, pour appliquer ainsi par stratification la mousse (13) sur la couche de fibres de verre (16) et le tissu (10) sur la mousse (13), et
(i) séparer les matrices (17, 22) et retirer la composition stratifiée résultante.

25. Procédé selon la revendication 24, dans lequel les fibres sont orientées au hasard dans la couche de fibres de verre (16), le liant qui maintient les fibres ensemble est une résine phénolique, la mousse est une mousse de polyuréthanne et la première couche d'adhésif a un point de fusion supérieur d'environ 11,1 à 27,8°C (20 à 50°F) à celui de la couche d'adhésif exposée.

26. Procédé selon la revendication 25, dans lequel l'adhésif des deux couches consiste essentiellement en une résine de polyamide, la mousse consiste essentiellement en un polyuréthanne à base de polyéther et le liant qui maintient les fibres ensemble consiste essentiellement en une résine phénol-formaldéhyde.

27. Procédé selon la revendication 26, dans lequel le tissu a un indice d'étirage d'au moins environ 10%.
